**Europäisches Patentamt**

**European Patent Office**

**Office européen des brevets**

(19)

(11) Numéro de publication : **0 477 287 B1**

(12) # FASCICULE DE BREVET EUROPEEN

(45) Date de publication du fascicule du brevet :
**07.09.94 Bulletin 94/36**

(51) Int. Cl.⁵ : **G02B 27/00**

(21) Numéro de dépôt : **90910130.5**

(22) Date de dépôt : **15.06.90**

(86) Numéro de dépôt international :
**PCT/FR90/00429**

(87) Numéro de publication internationale :
**WO 90/16004 27.12.90 Gazette 90/29**

(54) **DISPOSITIF OPTIQUE, DU TYPE TETE BASSE, DELIVRANT DES INFORMATIONS A UN CONDUCTEUR DE VEHICULE AUTOMOBILE.**

(30) Priorité : **15.06.89 FR 8907950**
**29.11.89 FR 8915712**
**08.03.90 FR 9002961**

(43) Date de publication de la demande :
**01.04.92 Bulletin 92/14**

(45) Mention de la délivrance du brevet :
**07.09.94 Bulletin 94/36**

(84) Etats contractants désignés :
**DE ES GB IT SE**

(56) Documents cités :
**WO-A-88/08146**
**WO-A-89/02611**
**DE-U- 8 714 769**
**FR-A- 2 624 295**
**GB-A- 2 166 899**
**US-A- 3 946 827**
**US-A- 4 294 515**
**PATENT ABSTRACTS OF JAPAN, vol. 11, no. 84 (P-556)(2531), 13 March 1987 ; & JP-A-61238016**

(73) Titulaire : **JAEGER**
**2, rue Baudin**
**F-92303 Levallois-Perret (FR)**

(72) Inventeur : **BEZARD, Jean-Jacques**
**11, rue des Bois-aux-Petits-Chênes**
**F-78400 Chatou (FR)**
Inventeur : **BONUTTO, Alain**
**45, rue Jean Leclaire**
**F-95220 Herblay (FR)**
Inventeur : **JURY, Catherine**
**6, rue Villebois-Mareuil**
**F-92400 Courbevoie (FR)**

(74) Mandataire : **Martin, Jean-Jacques**
**Cabinet REGIMBEAU**
**26, Avenue Kléber**
**F-75116 Paris (FR)**

## Description

La présente invention concerne un dispositif optique, du type tête basse, conçu pour délivrer des informations à un conducteur de véhicule automobile.

On a déjà proposé de nombreux dispositifs conçus pour délivrer des informations optiques à un conducteur de véhicule automobile. On a proposé par exemple depuis longtemps des appareils indicateurs à aiguille ainsi que des témoins lumineux. On a proposé plus récemment des afficheurs électro-luminescents et des afficheurs à cristaux liquides.

Ces derniers tendent à être préférés de nos jours, notamment pour des raisons d'esthétique. Cependant, leur coût est souvent prohibitif lorsque l'afficheur doit atteindre une taille importante.

On connaît par ailleurs dans le domaine de l'aéronautique des systèmes dits du type "afficheur tête basse". Ces systèmes ont pour but de projeter des informations à l'infini ou à grande distance, dans le champ de vision des équipements situés juste en dessous de la ligne de vision basse du champ de vision du paysage sans superposition entre le paysage et l'information. Les systèmes du type "afficheur tête basse" permettent un gain appréciable en rapidité d'acquisition des informations projetées, car ils limitent l'accommodation ou convergence requise lors du passage du paysage aux informations.

Cependant, les systèmes du type tête basse proposés pour l'aéronautique sont en général complexes et coûteux.

On a également proposé, par exemple, dans le document WO-A-8902611 des systèmes du type afficheur tête basse destiné à fournir des informations à un conducteur automobile.

Toutefois, le système décrit dans le document WO-A-8902611 est également assez complexe. Il comprend notamment un afficheur associé par l'intermédiaire d'un faisceau de fibres optiques à une source d'éclairage.

Le système décrit dans le document WO-A-8902611 n'a pas donné lieu pour l'instant à une application dans le domaine automobile.

La présente invention a pour but de proposer un nouveau dispositif optique délivrant des informations à un conducteur de véhicule automobile, qui élimine les inconvénients des dispositifs antérieurs.

Ce but est atteint selon la présente invention grâce à un dispositif optique délivrant des informations à un conducteur de véhicule automobile, comprenant un miroir concave placé en dessous de la ligne de vision basse du champ de vision du paysage, la concavité dirigée vers le conducteur, et un imageur conçu pour diriger un signal lumineux vers le miroir, dans lequel le miroir concave est défini par une calotte torique, ledit dispositif comprenant des moyens de réglage en orientation du miroir concave et/ou de l'imageur autour d'un axe horizontal.

Le système proposé par la présente invention est simple, robuste, fiable et économique.

Il permet une adaptation rapide de tout conducteur même non familiarisé avec des systèmes sophistiqués.

Il permet en outre grâce au grossissement apporté par le miroir concave, d'utiliser un imageur de dimension réduite. Cette disposition est intéressante car elle réduit le coût de l'imageur. Elle permet en outre un gain de place appréciable.

Selon une caractéristique avantageuse de la présente invention, le signal lumineux issu de l'imageur est dirigé vers le miroir concave par un miroir auxiliaire de renvoi.

Selon une autre caractéristique de la présente invention le dispositif imageur est du type statique, par exemple du type LCD, et un connecteur de raccordement entre l'imageur et un circuit d'alimentation et de génération d'informations, est placé sur un côté vertical de l'imageur.

Cette caractéristique permet d'utiliser au maximum la place disponible, limitée en hauteur, dans l'habitacle où le combiné doit être compris entre la face supérieure de la colonne de direction et le bas du pare-brise. On peut en effet ainsi réaliser un imageur dont la hauteur utile est pratiquement égale à la hauteur disponible.

Selon une autre caractéristique avantageuse de la présente invention, le dispositif imageur est de type statique et des connecteurs de raccordement entre l'imageur et un circuit d'alimentation et de génération d'informations sont placés respectivement sur chacun des côtés verticaux de l'imageur.

Selon une autre caractéristique avantageuse de la présente invention, un circuit électronique intégré au moins servant à piloter l'imageur est disposé sur une zone latérale verticale de l'un des verres de l'imageur. Plus précisément, de préférence, il est prévu un circuit électronique intégré servant à piloter l'imageur respectivement sur chacune des zones latérales verticales de l'imageur, sur l'extérieur de la zone utile de visualisation des symboles.

Selon une autre caractéristique de la présente invention le dispositif imageur comprend différents éléments plans inclinés entre eux, dont les positions par rapport au miroir sont optimisées pour générer une image exempte de déformation.

Selon une autre caractéristique avantageuse de la présente invention il est prévu un dispositif indicateur sur chaque élément plan du dispositif imageur.

D'autres caractéristiques, buts et avantages de la présente invention apparaîtront à la lecture de la description détaillée qui va suivre et en regard des dessins annexés donnés à titre d'exemples non limitatifs et sur lesquels :

- la figure 1 représente selon une vue schématique en coupe verticale, l'implantation d'un dispositif conforme à la présente invention,

- la figure 2 représente selon une vue schématique en coupe verticale, les éléments essentiels d'un dispositif optique conforme à la présente invention,
- la figure 3 représente une vue de détail de ce dispositif,
- la figure 4 représente une vue partielle d'une variante de réalisation du dispositif optique conforme à la présente invention, avec miroir de renvoi,
- les figures 5 et 6 illustrent deux dispositions de correction d'aberration au niveau de l'imageur,
- la figure 7 représente une vue schématique en coupe verticale d'une variante de réalisation du dispositif conforme à la présente invention équipée d'une optique correctrice,
- la figure 8 représente une vue de face d'un miroir concave conforme à la présente invention,
- la figure 9 représente une vue schématique en coupe horizontale du même miroir selon le plan de coupe référence IX-IX sur la figure 8,
- la figure 10 représente une vue schématique en coupe verticale du même miroir selon un plan de coupe référence X-X sur la figure 8,
- la figure 11 représente selon une vue schématique horizontale le champ de vision d'un observateur, et
- la figure 12 représente une vue schématique de face d'un imageur conforme à la présente invention.
- la figure 13 annexée représente, de façon schématique, une des faces d'un imageur statique, par exemple de type LCD, conforme à un mode de réalisation préférentiel de la présente invention,
- la figure 14 représente une vue schématique verticale des éléments essentiels d'un dispositif optique conforme à la présente invention,
- la figure 15 représente une vue schématique de dessus d'un imageur conforme à la présente invention, et
- les figures 16A et 16B illustrent schématiquement une étape du processus d'optimisation du dispositif conforme à la présente invention.

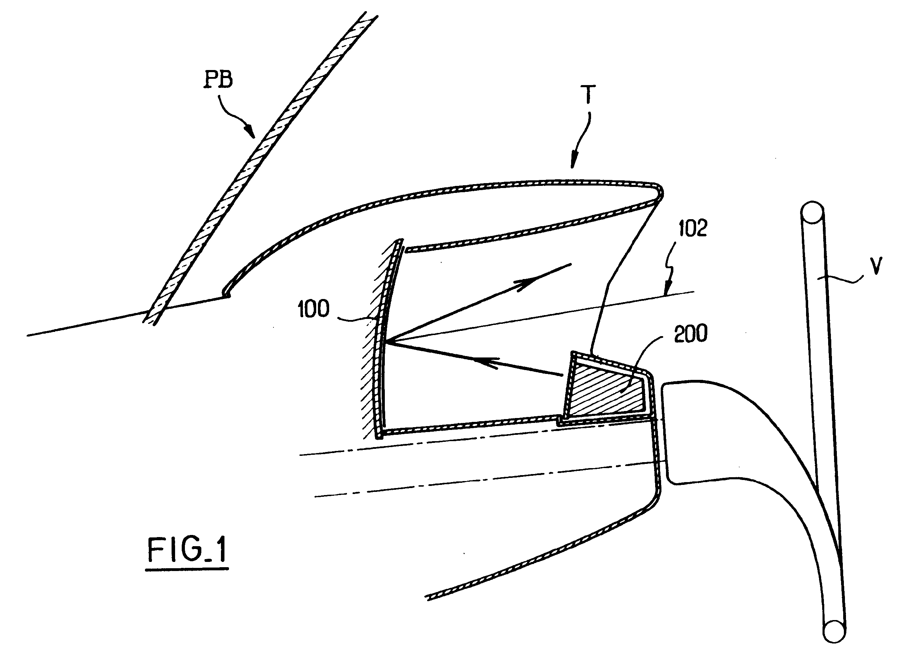

On a représenté sur la figure 1 annexée la structure de base d'un dispositif optique conforme à la présente invention.

On aperçoit partiellement sur la figure 1 annexée le pare-brise PB, le volant V et la visière d'un tableau de bord T d'un véhicule automobile. Le dispositif optique conforme à la présente invention est intégré au tableau de bord T. Il comprend un miroir concave 100 et un imageur 200.

Le miroir concave 100 a sa concavité dirigée vers l'observateur, c'est-à-dire vers l'arrière du véhicule. L'imageur 200 est dirigé vers le miroir, c'est-à-dire vers l'avant du véhicule automobile. Plus précisément, l'imageur 200 est placé derrière le volant V.

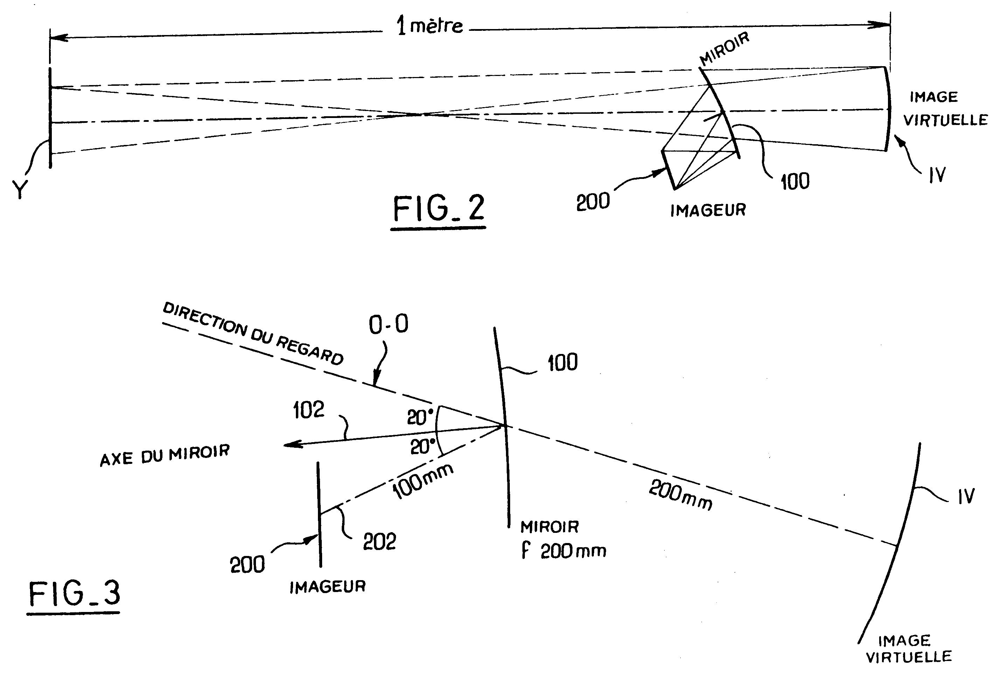

L'observateur voit l'image virtuelle de l'imageur 200 grâce au miroir 100, comme illustré par exemple sur la figure 2.

Sur cette figure 2, on a référencé IV l'image virtuelle de l'imageur donnée par le miroir, et Y le plan des yeux de l'observateur.

L'axe optique 102 du miroir est de préférence sensiblement parallèle à l'axe longitudinal du véhicule, et légèrement incliné sur l'horizontale, en élévation vers l'arrière du véhicule.

Comme représenté sur les figures 2 et 3 le miroir concave 100 présente de préférence une focale de l'ordre de 200mm dans un plan de coupe vertical. Il est avantageusement placé à une distance de l'ordre de 80cm des yeux Y de l'observateur, de sorte que l'image virtuelle IV soit placée à environ 1m des yeux Y.

L'axe 202 du faisceau lumineux émis par l'imageur 200 vers le miroir concave 100 est symétrique de la direction du regard O-O de l'observateur d'images par rapport à l'axe 102 du miroir 100. De préférence l'orientation du miroir 100 et de l'imageur 200 est telle que la direction du regard O-O est inclinée d'environ 20° par rapport à l'axe 102 du miroir. Il en est de même de l'axe 202 de l'imageur par rapport à l'axe 102 du miroir. L'imageur 200 est par ailleurs placé à environ 100mm du miroir 100 de préférence.

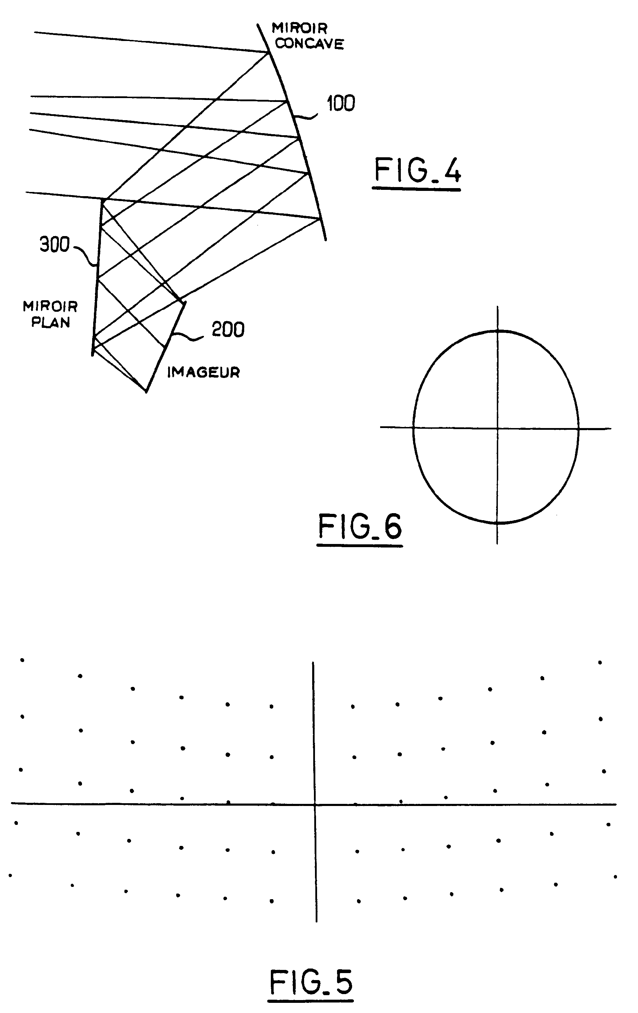

Comme représenté sur la figure 4, on peut réduire l'encombrement du dispositif en déviant le signal lumineux généré par l'imageur 100, vers le miroir concave 200 grâce à un miroir de renvoi 300. Selon la représentation donnée sur la figure 4, le miroir de renvoi 300 est un miroir plan sensiblement vertical et transversal à l'axe longitudinal du véhicule. Le miroir de renvoi 300 pourra présenter des géométries différentes.

Ainsi, selon la représentation donnée sur la figure 4, le dispositif optique comprend un miroir concave 100 dont la concavité est dirigée vers l'observateur, c'est-à-dire vers l'arrière du véhicule, un miroir de renvoi 300 dont la face réfléchissante est dirigée vers l'avant du véhicule, soit vers le miroir concave 100, et un imageur 200 dirigé, vers le miroir plan 300, c'est-à-dire vers l'arrière du véhicule.

On notera que l'image virtuelle IV donnée par le miroir concave 100 est déformée par rapport à l'image réelle de l'imageur 200.

Pour mettre une information correcte, c'est-à-dire sans distorsion, à la disposition de l'observateur, il peut être utile de corriger la distorsion introduite par le miroir 100 directement sur l'imageur 200. A titre d'exemple on a représenté sur la figure 5 la déformation d'un quadrillage requise sur l'imageur 200 pour obtenir une image virtuelle correcte. On a par ailleurs représenté sur la figure 6 la déformation d'un cercle requise sur l'imageur 200.

On notera également que de préférence, l'imageur 200 est formé non pas d'une surface émissive plane mais, d'une surface bombée, afin de corriger les aberrations introduites par le miroir concave 100.

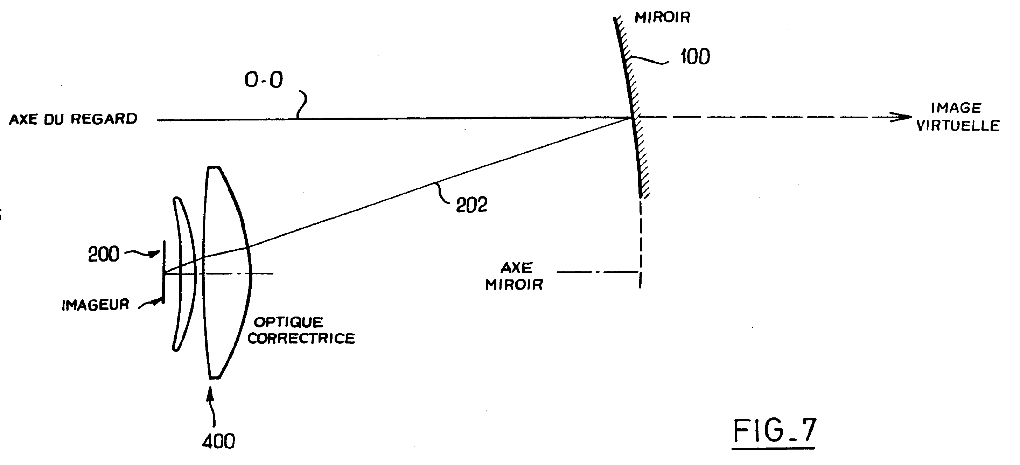

Selon encore une autre variante de réalisation représentée sur la figure 7, on peut prévoir une optique correctrice 400 entre l'imageur 200 et le miroir concave 100.

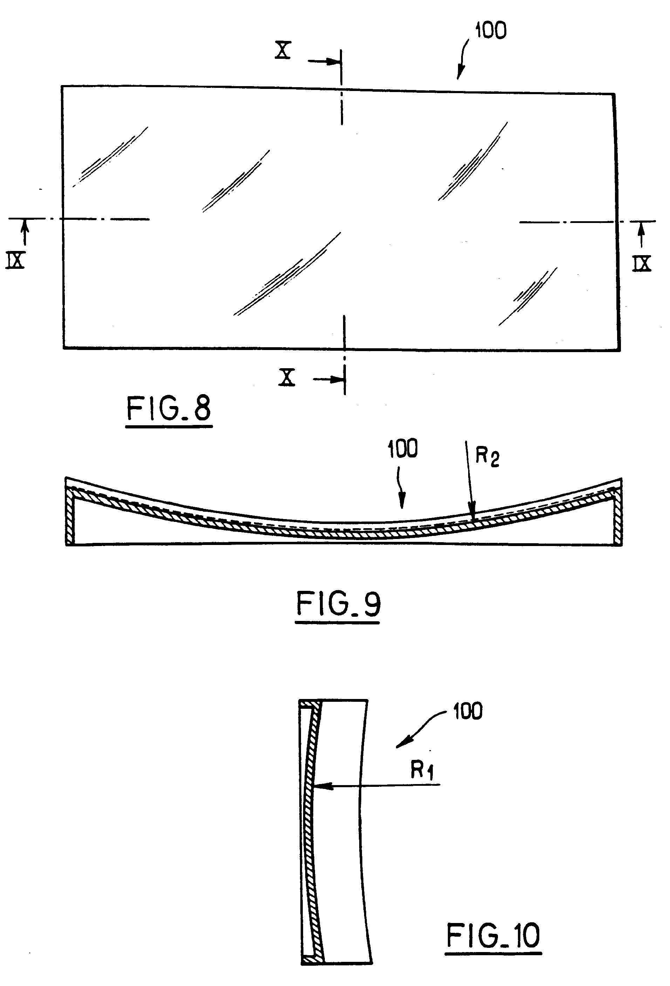

Comme représenté sur les figures 8, 9 et 10, le miroir concave 100 conforme à la présente invention est délimité par une calotte torique, c'est-à-dire une surface engendrée par un secteur de cercle tournant autour d'une droite située dans son plan mais ne passant pas par son centre.

De préférence, comme représenté sur la figure 8, le miroir 100 d'allure torique, présente un contour rectangulaire, allongé horizontalement. Selon le mode de réalisation représenté sur les figures 8, 9 et 10, et donné à titre d'exemple non limitatif, le miroir 100 est ainsi délimité par une calotte torique de contour rectangulaire, présentant une hauteur de l'ordre de 110mm, et une longueur horizontale de l'ordre de 230mm, le rayon de courbure du miroir dans un plan de coupe horizontal est de l'ordre de 352mm, tandis que le rayon de courbure du même miroir 100 dans un plan de coupe vertical est de l'ordre de 400mm.

En d'autres termes, la surface du miroir représentée sur les figures 8, 9 et 10 peut être définie soit par la rotation du secteur de cercle apparaissant sur la figure 10, d'un rayon de l'ordre de 400mm, autour d'un axe vertical passant par le plan de symétrie vertical du miroir et distant de ce secteur d'environ 352mm, soit par la rotation du secteur représenté sur le plan de coupe horizontal de la figure 9 d'un rayon de l'ordre de 352mm et, autour d'un axe horizontal confondu avec le plan de symétrie horizontal du miroir, et séparé de ce secteur d'environ 400mm.

Le miroir concave 100 peut être réalisé selon toute technique classique appropriée. On citera à titre d'exemple la réalisation des miroirs 100 par moulage d'un corps en matière plastique, puis réalisation, par exemple par métallisation, d'un revêtement réfléchissant. Le corps en matière plastique du miroir peut être formé par exemple de polyméthacrylate de méthyle.

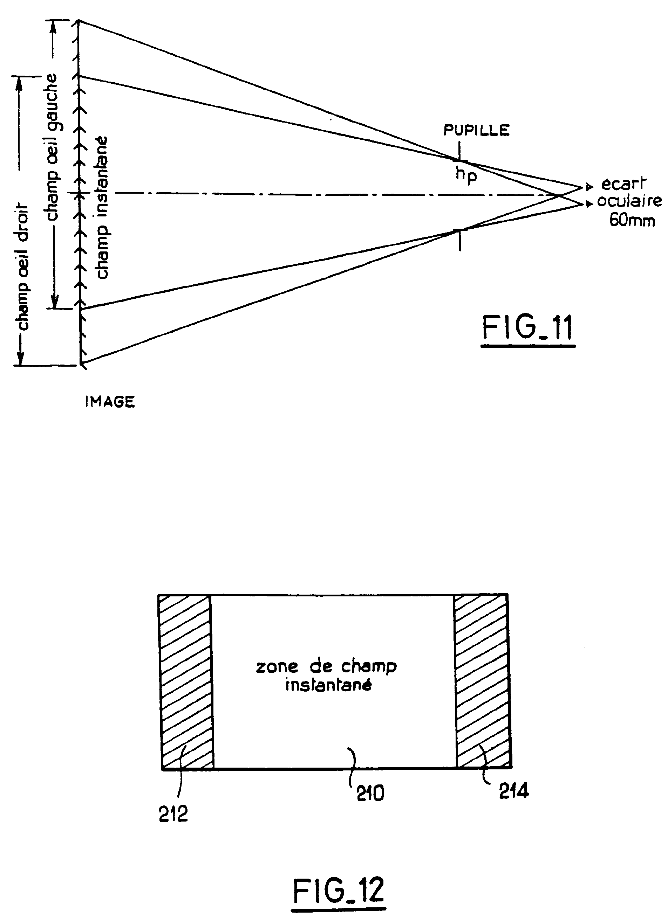

On a représenté sur la figure 11 annexée, le champ de l'oeil droit, le champ de l'oeil gauche, et le champ instantané d'un observateur, qui correspond à la zone couverte simultanément par le champ de l'oeil droit et le champ de l'oeil gauche. On comprendra aisément à l'examen de la figure 11, que le champ instantané de l'image virtuelle observé simultanément par les deux yeux d'un observateur correspond seulement à une plage centrale d'environ 70% du champ total.

Il est donc avantageux, comme représenté schématiquement sur la figure 12, de placer les informations utiles à mettre à la disposition de l'observateur, dans une plage centrale 210 de l'imageur, couvrant environ 70% en longueur horizontale de l'imageur, et de réserver les deux plages latérales 212, 214, d'environ 15% chacune, à des informations secondaires, ou un fond d'ambiance.

Le miroir concave 100 peut encore être semi-réfléchissant et associé à un second imageur placé derrière le miroir et dirigé vers l'arrière du véhicule. Une telle disposition permet de superposer un second type d'image au champ de vision de l'observateur. On peut prévoir de projeter une image donnée par le second imageur dans le même plan que l'image virtuelle donnée par le miroir concave 100 de l'imageur 200. Cette disposition n'est cependant pas impérative.

Les deux imageurs peuvent être utilisés simultanément pour superposer les informations. Ils peuvent être utilisés alternativement. Ils peuvent encore être utilisés avec des degrés de luminosité intermédiaires.

On citera à titre d'exemple, la possibilité de superposer, grâce aux deux imageurs, des informations complémentaires, telles que par exemple d'une part un cadran pour l'un des imageurs et une aiguille associée pour l'autre.

L'imageur 200 peut faire l'objet de nombreux modes de réalisation. A titre d'exemple, on citera outre les imageurs classiques à cadran ou aiguille des imageurs du type LCD, VFT, CRT, LED, ou encore tout type de surface électro-luminescente.

On notera que l'homme de l'art sait réaliser actuellement des imageurs à cristaux liquides bombés à base de support en matériau plastique. Cette technique peut s'avérer avantageuse, comme indiqué précédemment, pour corriger complètement les aberrations introduites par le miroir concave 100.

On notera également la possibilité d'adjoindre une plaque de matériau, par exemple du polyméthacrylate de méthyle, en avant de l'imageur 200, soit entre celui-ci et le miroir concave 100, la plaque précitée étant pourvue d'une impression dans son épaisseur, et éclairée sur sa tranche. Une telle plaque est en outre de préférence traitée anti-reflet sur sa face avant. Elle permet de projeter dans le champ de vision différentes couleurs, ou encore de définir un cadre sur l'image virtuelle, sans requérir de cadre correspondant sur l'imageur 200 proprement dit. Cette disposition s'avère très avantageuse dans la mesure où elle évite la réalisation d'un cadre sur l'imageur lui-même, un tel cadre limitant dans une large mesure les autres possibilités de connexion de sortie.

Par ailleurs, de préférence le dispositif optique conforme à la présente invention comprend des moyens conçus pour éviter la focalisation de la lumière ambiante notamment du soleil rasant, susceptible d'entraîner un échauffement néfaste à l'intérieur du véhicule.

Selon une première variante, ces moyens peuvent être formés d'une vitre absorbante placée en amont du miroir concave. Il peut s'agir d'un élément LCD opaque à l'arrêt pour occulter les rayons solaires, mais transparent en service.

Il peut s'agir également d'un revêtement absorbant placé sur le miroir concave 100. On citera la possibilité d'utiliser un miroir froid, tels que les miroirs commercialisés par la Société MELLES GRIOT, pour absorber sélectivement les rayons solaires.

Selon une autre caractéristique le dispositif optique conforme à la présente invention est pourvu de moyens de réglage en orientation, pour permettre d'adapter le dispositif avec précision à tout conducteur quelle que soit sa taille.

Selon une première variante, le miroir concave 100 et l'imageur 200 forment un système solidaire, sans déplacement relatif possible entre le miroir 100 et l'imageur 200. Dans ce cas, le système ainsi formé est avantageusement susceptible de rotation contrôlée autour d'un axe horizontal généralement passant par la pupille de l'observateur.

Selon une seconde variante, l'un seulement des éléments miroir ou imageur composant le dispositif optique, peut être mobile pour permettre le réglage.

On citera également la possibilité de visualiser des informations dans des plans différents du champ de vision grâce aux moyens décrits et représentés dans la demande de brevet déposée par la demanderesse le 30 Novembre 1988 sous le n° 88 15693.

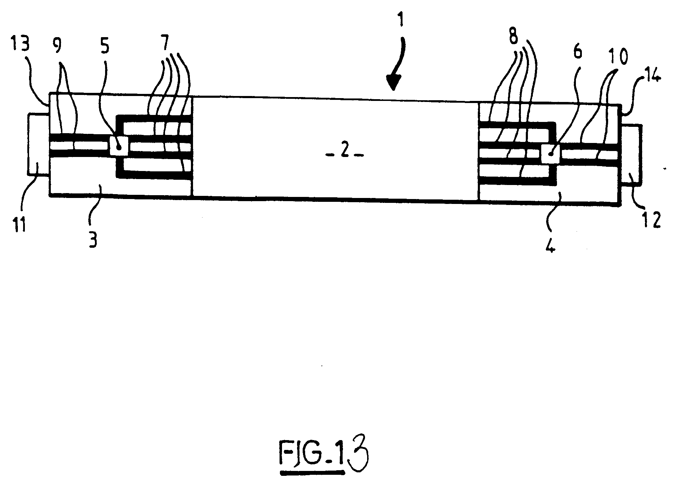

Sur la figure 13 annexée on aperçoit :
- sous la référence 1 l'une des plaques en verre d'un imageur par exemple de type LCD,
- sous la référence 2, la zone centrale utile, au niveau de laquelle apparaissent les symboles à visualiser,
- sous les références 3, 4, les zones latérales de l'imageur placées à l'extérieur de la zone centrale utile 2,
- sous les références 5, 6, des circuits intégrés pilotes de l'imageur placés sur les zones latérales 3, 4,
- sous les références 7, 8, des pistes électriquement conductrices prévues sur les zones latérales 3, 4, pour raccorder les circuits intégrés 5, 6 aux électrodes de commande de l'imageur,
- sous les références 9, 10 des pistes électriquement conductrices prévues sur les zones latérales 3, 4, pour raccorder les circuits intégrés 5, 6 à des connecteurs extérieurs 11, 12. Ceux-ci sont donc disposés sur les bords latéraux verticaux 13, 14 de l'imageur.

Les circuits intégrés 5, 6 sont avantageusement du type à commande multiplexé, pour limiter le nombre de conducteurs entre le circuit de commande et de traitement des informations et l'imageur.

Dans le cadre de la présente invention, l'imageur de type statique peut être avantageusement de type LCD comme précité, ou VFT, CRT, électrochromique, ou encore par tout imageur plan connu de l'homme de l'art.

On a représenté sur la figure 14 annexée un dispositif optique conforme à la présente invention comprenant un miroir concave 100 et un imageur 200.

Le miroir concave 100 a sa concavité dirigée vers l'observateur, c'est-à-dire vers l'arrière du véhicule. Sur la figure 1 l'oeil de l'observateur est référencé O1.

L'imageur 200 est dirigé vers le miroir 100, c'est-à-dire vers l'avant du véhicule. On notera cependant qu'en variante comme décrit précédemment, un imageur peut être placé derrière le miroir 100.

Sur la figure 14 on a référencé IV l'image virtuelle de l'imageur 200 donnée par le miroir 100.

Le sommet du miroir est référencé O2. Le centre de l'imageur est référencé B. Le centre de l'image virtuelle est référencé B'. L'angle entre l'axe de visée de l'observateur O1-O2-B' et l'axe du miroir 100 est référencé θ.

Différentes voies peuvent être suivies pour concevoir le dispositif représenté sur la figure 14.

Selon une voie préférentielle on procède comme suit.

On commence par fixer les valeurs suivantes :
- position de l'oeil par rapport à l'image,
- dimension de l'image virtuelle IV,
- encombrement de l'ensemble miroir 100 imageur 200,
- distance de l'oeil O1 au miroir 100.

A cela on ajoute la condition nécessaire qui est que l'imageur ne doit pas être dans le champ de vision et doit être le plus près possible de l'axe du miroir afin de limiter le champ.

Une fois ces conditions définies on calcule le système à l'aide des formules suivantes :

$$(1)\ p = \left|\overline{O1\ O2}\right|$$

$$(2)\ e = \left|\overline{O2\ B}\right|$$

$$(3)\ e' = \left|\overline{O2\ B'}\right|$$

$$(4)\ \sin\theta = \frac{K'p}{4(p+e')}\left(\frac{1}{e} + \frac{1}{e'}\right)$$

$$(5)\ \phi = K'\frac{p}{p+e'}$$

$$(6)\ C = \frac{1}{2\cos\theta}\left(\frac{1}{e'} - \frac{1}{e}\right)$$

$$(7)\ K = \frac{e}{e'}K'$$

Dans lesquels θ représente l'angle entre l'axe de visée de l'observateur passant par le sommet du miroir O1, O2 et l'axe du miroir, φ représente le diamètre du miroir, C représente la courbure du miroir et K et K' représentent respectivement les dimensions de l'imageur et de l'image virtuelle.

A titre d'exemple pour :
p = 800mm, K' = 120mm, e = 100mm et e' = 200mm
on obtient
φ = 96mm
sin θ = 0,36 soit θ = 21,1 degrés
K = 60mm

Le système ainsi obtenu est généralement entaché d'aberrations. Pour le corriger, on peut faire varier certains paramètres du système (comme la courbure du miroir, son asphérisation, la distance de l'imageur au miroir, l'inclinaison de l'imageur, etc ...) de façon à obtenir une image nette et non déformée de l'imageur quand on regarde le système à l'oeil nu.

Pour cela on peut par exemple se fixer comme objectif d'obtenir une tache d'aberration et une déformation inférieures à 18", soit 0,08mm à 1m (résolution de l'oeil pour un sujet entraîné).

On notera que le système ne présente pas d'aberration chromatique puisqu'il ne comporte qu'un miroir.

De plus, comme la pupille du système est l'oeil (donc de dimension réduite), on est peu gêné par les aberrations d'ouverture comme l'aberration sphérique et la coma.

Par contre étant donné les champs relativement importants (supérieurs à 20° dans l'exemple précité), la courbure et la distorsion peuvent prendre des valeurs importantes.

Pour y remédier on peut jouer sur la forme du miroir (en asphérisant ce dernier) et en optimisant d'autres paramètres tels que la position et la courbure de l'objet, c'est-à-dire l'imageur 200.

La demanderesse a cependant déterminé que pour simplifier la réalisation de l'imageur, on pouvait concevoir celui-ci non point sous forme d'un élément courbe répondant à la courbe théorique obtenue par le processus d'optimisation, mais sous forme d'un élément polygonal tangent à la courbe théorique obtenue.

Pour cela, la géométrie du miroir étant optimisée (sphérique, parabolique, toroïdale, asphérique ou autres) pour avoir le minimum d'aberration, le positionnement des plans du polygone pour avoir le minimum de déformation est optimisé selon le processus suivant.

Soit comme représenté sur la figure 16A un objet O représenté par un cercle et des rayons, et mis dans un plan de l'imageur polygonal.

Les calculs par logiciels optiques connus en donnent une image I représentée sur la figure 16B par rapport au miroir O2 précédemment déterminé.

On peut définir pour chaque rayon de l'image I, sa corde K et sa flèche F.

Pour l'ensemble des rayons R, K varie d'une valeur minimale $K_m$ à une valeur maximale $K_M$ dont la différence k est caractéristique de l'orientation du plan de l'imageur.

De même la flèche F a une valeur maxi $F_M$ également caractéristique de l'orientation du plan de l'imageur.

On définit une fonction $A = \alpha k + \beta F_M$ ($\alpha$ et $\beta$ sont les poids que l'on attribue à k et $F_M$) que l'on cherche à réduire au minimum. Cette fonction A dépend de l'orientation du plan de l'objet par rapport au système.

Soit l'angle entre le plan de l'objet O et un plan horizontal de référence et $\delta$ l'angle entre le plan de l'objet O et un plan vertical de référence. La fonction A présente un minimum en fonction de Y et un minimum en fonction de $\delta$. Ces points sont les valeurs de positionnement optimales de chaque plan de l'imageur polygonal. Les valeurs $\gamma$ et $\delta$ précitées peuvent être obtenues par itérations successives sur logiciels.

Bien entendu d'autres moyens peuvent être utilisés pour optimiser les valeurs des angles $\gamma$ et $\delta$.

Comme indiqué précédemment la réalisation d'un imageur sous forme de différents éléments plans inclinés, c'est-à-dire sous forme d'un polygone permet une réalisation très économique de l'imageur.

Selon une autre caractéristique avantageuse de l'invention il est prévu un dispositif indicateur au moins au niveau de chaque plan du dispositif imageur.

Par ailleurs, ces dispositifs indicateurs sont avantageusement du type à aiguille tandis que l'imageur porte un cadran dont les graduations sont équiréparties sur un cercle ou un secteur de cercle centré sur l'axe de rotation de l'aiguille.

En effet, le processus d'optimisation précédemment décrit permet d'obtenir une image de l'aiguille non déformée et qui reste donc équidistante des graduations.

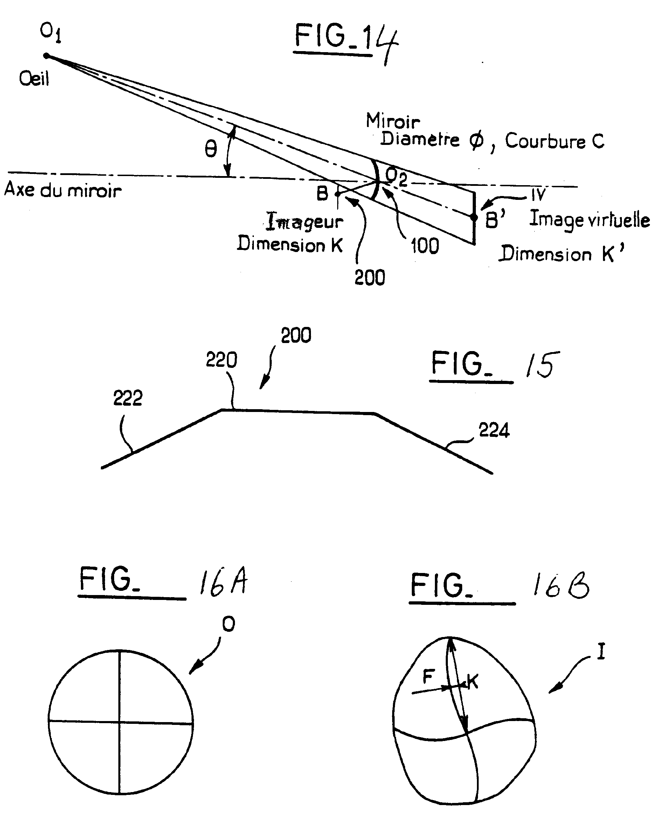

Comme représenté schématiquement en vue de dessus sur la figure 15, l'imageur polygonal est de préférence symétrique par rapport à l'axe BO2 passant par le centre de l'imageur et le centre du miroir.

Plus précisément encore, comme représenté sur la figure 15, l'imageur 200 comprend avantageusement trois plans inclinés entre eux : un premier plan 220 normal à l'axe B02 et deux plans latéraux 222, 224 symétriques par rapport à un plan vertical passant par l'axe BO2 et délimitant une surface généralement convexe vers le miroir concave 100.

Le dispositif optique peut être pourvu de moyens de réglage en orientation pour permettre d'adapter le dispositif avec précision à tout conducteur, quelle que soit sa taille.

Pour cela on peut prévoir de commander le système d'orientation du dispositif par des moyens motorisés contrôlés par une mémoire contenant une ou des valeurs de consigne correspondant aux positionnements requis pour chaque conducteur afin d'automatiser le positionnement du dispositif.

De tels moyens de commande à mémoire connus en eux-mêmes ne seront pas décrits en détail par la suite. Ils peuvent être conformes aux dispositions décrites dans les documents FR-A-2585200, FR-A-2627916 et FR-A-2628906.

Selon une autre caractéristique de la présente invention, on peut prévoir des moyens plus simples pour orienter le dispositif à la convenance de chaque conducteur.

Pour cela les moyens d'orientation peuvent comprendre un bouton ou tout moyen équivalent accessible à l'extérieur du tableau de bord pour être commandé par l'utilisateur, et relié à l'axe de pivotement du dispositif par des moyens d'entraînement. De tels moyens d'entraînement peuvent être choisis dans le groupe comprenant des bielles, une courroie, de préférence crantée, une chaîne, des pignons, ou tous moyens équivalents.

## Revendications

1. Dispositif optique délivrant des informations à un conducteur de véhicule automobile, comprenant un miroir concave (100) placé en dessous de la ligne de vision basse du champ de vision du paysage, la concavité dirigée vers le conducteur, et un imageur (200) conçu pour diriger un signal lumineux vers le miroir (100), caractérisé par le fait que le miroir concave (100) est défini par une calotte torique et par le fait que le dispositif comprend des moyens de réglage en orientation du miroir concave (100) et/ou de l'imageur (200) autour d'un axe horizontal.

2. Dispositif optique selon la revendication 1, caractérisé par le fait que l'imageur (200) et le miroir concave (100) forment un système solidaire sans possibilité de déplacement relatif, et que ce système est susceptible de rotation autour d'un axe horizontal sensiblement passant par la pupille.

3. Dispositif optique selon l'une des revendications 1 ou 2, caractérisé par le fait que le miroir concave (100) et l'imageur (200) forment un système solidaire monté à rotation autour de l'axe horizontal sur un élément support, et qu'il comprend des moyens motorisés de commande en orientation du système, associés à des moyens de mémoire qui définissent au moins une consigne de position en fonction d'un conducteur.

4. Dispositif optique selon l'une des revendications 1 ou 2, caractérisé par le fait que le miroir concave (100) et l'imageur (200) forment un système solidaire monté à rotation autour de l'axe horizontal sur un support et qu'il est prévu un moyen de commande manuel accessible sur le tableau de bord du véhicule et relié à l'axe d'articulation du système par l'intermédiaire de moyens choisis dans le groupe comprenant une bielle, une courroie, une chaîne ou des pignons.

5. Dispositif optique selon la revendication 1, caractérisé par le fait que l'un seulement des éléments, miroir concave (100) ou imageur (200), composant le dispositif optique, est mobile à rotation autour de l'axe horizontal.

6. Dispositif optique, selon l'une des revendications 1 à 5, caractérisé par le fait que l'imageur (200) comprend différents éléments plans inclinés entre eux (220, 222, 224) dont les positions par rapport au miroir (100) sont optimisées pour générer une image exempte de déformation.

7. Dispositif optique selon la revendication 6, caractérisé par le fait que l'imageur (200) comprend un dispositif indicateur au moins sur chaque élément plan (220, 222, 224).

8. Dispositif optique selon l'une des revendications 1 à 7, caractérisé par le fait que l'un au moins des dispositifs indicateurs prévus sur l'imageur (200) est un dispositif indicateur à aiguille.

9. Dispositif optique selon l'une des revendications 6 à 8, caractérisé par le fait que les différents plans de l'imageur (200) définissent une enveloppe convexe vers le miroir concave (100).

10. Dispositif optique selon l'une des revendications 6 à 9, caractérisé par le fait que l'imageur (200) comprend trois éléments plans inclinés entre eux (220, 222, 224).

11. Dispositif optique selon la revendication 10, caractérisé par le fait que l'imageur comprend un premier élément plan (220) normal à un axe (BO2) passant par le centre de l'imageur (200) et le centre du miroir concave (100) et deux éléments plans latéraux (222, 224) symétriques entre eux par rapport à un plan vertical passant par l'axe précité (BO2).

12. Dispositif optique selon l'une des revendications 1 à 11, caractérisé par le fait que le signal lumineux issu de l'imageur (200) est dirigé vers le miroir concave (100) par un miroir auxiliaire de renvoi (300).

13. Dispositif optique selon l'une des revendications 1 à 12, caractérisé par le fait que le miroir concave (100) possède un rayon de courbure de l'ordre de 352mm dans un plan de coupe horizontal et un rayon de courbure de l'ordre de 400mm dans un plan de coupe vertical.

14. Dispositif optique selon l'une des revendicaions 1 à 13, caractérisé par le fait que les informations utiles sont contenues sur une plage centrale (210) de l'imageur (200) couvrant environ 70% de sa longueur horizontale.

15. Dispositif optique selon l'une des revendications 1 à 14, caractérisé par le fait que le miroir concave (100) est semi-réfléchissant et qu'il est prévu un second imageur derrière le miroir concave (100).

16. Dispositif optique selon l'une des revendications 1 à 15, caractérisé par le fait qu'il est prévu une plaque de matériau transparent, pourvue d'une impression dans son épaisseur, et éclairée sur la tranche, entre l'imageur (200) et le miroir concave (100).

17. Dispositif optique selon l'une des revendications 1 à 16, caractérisé par le fait que le miroir concave (100) est pourvu d'un revêtement sélectivement absorbant.

18. Dispositif optique, selon l'une des revendications 1 à 17, caractérisé par le fait que l'imageur (200) est de type statique et qu'un connecteur de raccordement (11, 12) entre l'imageur (200) et un circuit d'alimentation et de génération d'informations est placé sur un côté vertical (13, 14) de l'imageur (200).

19. Dispositif optique selon la revendication 18, caractérisé par le fait que deux connecteurs (11, 12) de raccordement entre l'imageur (200) et un circuit d'alimentation et de génération d'informations sont placés respectivement sur les côtés verticaux (13, 14) de l'imageur (200).

20. Dispositif optique selon l'une des revendications 1 à 19, caractérisé par le fait qu'au moins un circuit électronique intégré (5, 6) servant à piloter l'imageur (200) est disposé sur une zone latérale (3, 4) de l'un des verres de l'imageur, à l'extérieur de la zone utile (2) contenant les symboles à visualiser.

21. Dispositif optique selon l'une des revendications 1 à 20, caractérisé par le fait que des circuits électroniques (5, 6) servant à piloter l'imageur (200) sont disposés respectivement sur chacune des zones latérales verticales (3, 4) de l'un des verres de l'imageur, sur l'extérieur de la zone utile (2) présentant les symboles à visualiser.

**Patentansprüche**

1. Optische Vorrichtung, die dem Fahrer eines Kraftfahrzeuges Informationen liefert, mit einem konkaven Spiegel (100), der unter der unteren Sichtlinie des Gesichtsfeldes der Umgebung angeordnet ist, wobei die Konkavität zum Fahrer gerichtet ist, und mit einem Bildgeber (200), der so ausgebildet ist, daß er ein Lichtsignal auf den Spiegel (100) wirft, dadurch gekennzeichnet, daß der konkave Spiegel (100) durch ein Torussegment gebildet ist und daß die Vorrichtung Einrichtungen zum Einstellen der Ausrichtung des konkaven Spiegels (100) und/oder des Bildgebers (200) um eine horizontale Achse aufweist.

2. Optische Vorrichtung nach Anspruch 1, dadurch gekennzeichnet, daß der Bildgeber (200) und der konkave Spiegel (100) eine feste Anordnung ohne die Möglichkeit einer gegenseitigen Verschiebung bilden und daß die Anordnung um eine horizontale Achse drehbar ist, die im wesentlichen durch die Pupille geht.

3. Optische Vorrichtung nach Anspruch 1 oder 2, dadurch gekennzeichnet, daß der konkave Spiegel (100) und der Bildgeber (200) eine feste Anordnung bilden, die um die horizontale Achse eines Halteelementes drehbar angebracht ist, und daß sie motorbetriebene Einrichtungen zum Steuern der Ausrichtung der Anordnung umfaßt, die mit Speichereinrichtungen verbunden sind, die wenigstens einen Positionseinstellwert in Abhängigkeit von einem Fahrer festlegen.

4. Optische Vorrichtung nach Anspruch 1 oder 2, dadurch gekennzeichnet, daß der konkave Spiegel (100) und der Bildgeber (200) eine feste Anordnung bilden, die um die horizontale Achse eines Halters drehbar angebracht ist, und daß eine Handsteuereinrichtung vorgesehen ist, die am Armaturenbrett des Fahrzeuges zugänglich ist und mit der Drehachse der Anordnung über Einrichtungen verbunden ist, die aus der Gruppe gewählt sind, die eine Treibstange, einen Treibriemen, eine Kette oder Ritzel umfaßt.

5. Optische Vorrichtung nach Anspruch 1, dadurch gekennzeichnet, daß nur eines der Bauelemente, nämlich der konkave Spiegel (100) oder der Bildgeber (200), die die optische Vorrichtung bilden, um die horizontale Achse drehbar ist.

6. Optische Vorrichtung nach einem der Ansprüche 1 bis 5, dadurch gekennzeichnet, daß der Bildgeber (200) verschiedene ebene Elemente (220, 222, 224) umfaßt, die zueinander schräg verlaufen und deren Positionen bezüglich des Spiegels (100) so optimiert sind, daß ein verzerrungsfreies Bild erzeugt wird.

7. Optische Vorrichtung nach Anspruch 6, dadurch gekennzeichnet, daß der Bildgeber (200) wenigstens an jedem ebenen Element (220, 222, 224) eine Anzeigeeinrichtung umfaßt.

8. Optische Vorrichtung nach einem der Ansprüche 1 bis 7, dadurch gekennzeichnet, daß wenigstens eine der Anzeigeeinrichtungen, die am Bildgeber (200) vorgesehen sind, ein Nadelanzeigeinstrument ist.

9. Optische Vorrichtung nach einem der Ansprüche 6 bis 8, dadurch gekennzeichnet, daß die verschiedenen Ebenen des Bildgebers (200) eine zum konkaven Spiegel (100) konvexe Hüllfläche bilden.

10. Optische Vorrichtung nach einem der Ansprüche 6 bis 9, dadurch gekennzeichnet, daß der Bildgeber (200) drei ebene Elemente (220, 222, 224) umfaßt, die schräg zueinander verlaufen.

11. Optische Vorrichtung nach Anspruch 10, dadurch gekennzeichnet, daß der Bildgeber ein erstes ebenes Element (220) normal zu einer Achse (BO2), die durch die Mitte des Bildgebers (200) und die Mitte des konkaven Spiegels (100) geht, und zwei seitliche ebene Elemente (222, 224) umfaßt, die bezüglich einer vertikalen Ebene symmetrisch zueinander liegen, die durch die genannte Achse (BO2) geht.

12. Optische Vorrichtung nach einem der Ansprüche 1 bis 11, dadurch gekennzeichnet, daß das Lichtsignal, das vom Bildgeber (200) ausgegeben wird, auf den konkaven Spiegel (100) über einen Hilfsumlenkspiegel (300) geworfen wird.

13. Optische Vorrichtung nach einem der Ansprüche 1 bis 12, dadurch gekennzeichnet, daß der konkave Spiegel (100) einen Krümmungsradius in der Größenordnung vom 352mm in einer horizontalen Schnittebene und einen Krümmungsradius in der Größenordnung von 400mm in einer vertikalen Schnittebene hat.

14. Optische Vorrichtung nach einem der Ansprüche 1 bis 13, dadurch gekennzeichnet, daß die Nutzinformationen an einem zentralen Bereich (210) des Bildgebers (200) enthalten sind, der etwa 70% der horizontalen Länge einnimmt.

15. Optische Vorrichtung nach einem der Ansprüche 1 bis 14, dadurch gekennzeichnet, daß der konkave Spiegel (100) halbreflektierend ist, und daß ein zweiter Bildgeber hinter dem konkaven Spiegel (100) vorgesehen ist.

16. Vorrichtung nach einem der Ansprüche 1 bis 15, dadurch gekennzeichnet, daß eine Scheibe aus einem transparenten Material, die mit einer Senke in Richtung ihrer Dicke versehen ist und am Rand beleuchtet ist, zwischen dem Bildgeber (200) und dem konkaven Spiegel (100) vorgesehen ist.

17. Optische Vorrichtung nach einem der Ansprüche 1 bis 16, dadurch gekennzeichnet, daß der konkave Spiegel (100) mit einem selektiv absorbierenden Überzug versehen ist.

18. Optische Vorrichtung nach einem der Ansprüche 1 bis 17, dadurch gekennzeichnet, daß der Bildgeber (200) ein statischer Typ ist und daß ein Verbindungsstecker (11, 12) zwischen dem Bildgeber (200) und einer Versorgungs- und Informationserzeugungsschaltung an einer vertikalen Seite (13, 14) des Bildgebers (200) vorgesehen ist.

19. Optische Vorrichtung nach Anspruch 18, dadurch gekennzeichnet, daß die beiden Verbindungsstecker (11, 12) zwischen dem Bildgeber (200) und der Versorgungs- und Informationserzeugungsschaltung jeweils an den vertikalen Seiten (13, 14) des Bildgebers (200) angeordnet sind.

20. Optische Vorrichtung nach einem der Ansprüche 1 bis 19, dadurch gekennzeichnet, daß wenigstens eine integrierte elektronische Schaltung (5, 6), die zum Steuern des Bildgebers (200) dient, an einem seitlichen Bereich (3, 4) eines Glases des Bildgebers außerhalb des Nutzbereiches (2) angeordnet ist, der die sichtbar zu machenden Symbole enthält.

21. Optische Vorrichtung nach einem der Ansprüche 1 bis 20, dadurch gekennzeichnet, daß die elektronischen Schaltungen (5, 6), die zum Steuern des Bildgebers (200) dienen, jeweils an jedem seitlichen vertikalen Bereich (3, 4) eines der Gläser des Bildgebers außerhalb des Nutzbereiches (2) angeordnet sind, der die sichtbar zu machenden Symbole zeigt.

**Claims**

1. An optical device for delivering information to the driver of a motor vehicle, the device comprising a concave mirror (100) placed below the bottom line of view in the landscape field of view, the concave side of the mirror facing the driver, and an imaging device (200) designed to direct a light signal towards the mirror (100), characterized by the fact that the concave mirror (100) is defined by a portion of the surface of a torus, and by the fact that the device includes means for adjusting the orientation of the concave mirror (100) and/or of the imaging device (200) about a horizontal axis.

2. An optical device according to claim 1, characterized by the fact that the imaging advice (200) and the concave mirror (100) form a rigid system without any possibility of relative displacement, and that this system is capable of rotating about a horizontal axis that passes through the pupil.

3. An optical device according to claim 1 or 2, characterized by the fact that the concave mirror (100) and the imaging device (200) form a solid system mounted on a support component to rotate about the horizontal axis, and that it includes motor driven means for controlling the pointing direction of the system in association with memory means that define at least one reference position as a function of the driver.

4. An optical device according to claim 1 or 2, characterized by the fact that the concave mirror (100) and the imaging device (200) form a solid system mounted on a support to rotate about the horizontal axis, and that manual control means are provided that are accessible on the vehicle dashboard and that are connected to the pivot shaft of the system via means selected from the group comprising: a linkage, a belt, a chain, or gearing.

5. An optical device according to claim 1, characterized by the fact that only one of the component parts of the optical device, i.e. only one of the concave mirror (100) and the imaging device (200), is rotatable about the horizontal axis.

6. An optical device according to any one of claims 1 to 5, characterized by the fact that the display device (200) comprises a plurality of mutually inclined plane components (220, 222, 224) whose positions relative to the mirror (100) are optimized to generate an image that is free from deformation.

7. An optical device according to claim 6, characterized by the fact that the display includes at least one indicator device on each plane component (220, 222, 224).

8. An optical device according to any one of claims 1 to 7, characterized by the fact that at least one of the indicator devices provided on the display device (200) is an indicator device having a pointer.

9. An optical device according to any one of claims 6 to 8, characterized by the fact that the various planes of the display device (200) define a convex envelope facing the concave mirror (100).

10. An optical device according to any one of claims 6 to 9, characterized by the fact that the display device (200) comprises three mutually inclined plane components (220, 222, 224).

11. An optical device according to claim 10, characterized by the fact that the display comprises a first plane component (220) normal to an axis (B02) passing through the center of the display device (200) and the center of the mirror (100) and two lateral plane components (222, 224) that are symmetrical to each other about a vertical plane including said axis (B02).

12. An optical device according to any one of claims 1 to 11, characterized by the fact that the light signal from the imaging device (200) is directed towards the concave mirror (100) by an auxiliary return mirror (300).

13. An optical device according to any one of claims 1 to 12, characterized by the fact that the concave mirror (100) has a radius of curvature of about 352 mm in a horizontal section plane and a radius of curvature of about 400 mm in a vertical section plane.

14. An optical device according to any one of claims 1 to 13, characterized by the fact that the useful information is contained in a central region (210) of the imaging device (200) occupying about 70% of its length.

15. An optical device according to any one of claims 1 to 14, characterized by the fact that the concave mirror (100) is semi-reflecting and is provided with a second imaging device behind the concave mirror (100).

16. An optical device according to any one of claims 1 to 15, characterized by the fact that a plate of transparent material is provided between the imaging device (200) and the concave mirror (100), the plate being provided with indenting in its thickness and being illuminated edge on.

17. An optical device according to any one of claims 1 to 16, characterized by the fact that the concave mirror (100) is provided with a selectively absorbent coating.

18. An optical device according to any one of claims 1 to 17, characterized by the fact that the display device (200) is of the static type and a connector (11, 12) is placed on one of the vertical sides (13, 14) of the display device (200) to provide connections between the display device (200) and a power supply and information generating circuit.

19. An optical device according to claim 18, characterized by the fact that two connectors (11, 12) are placed on respective vertical sides (13, 14) of the display device (200) to provide connections between the display device (200) and a power supply and information-generating circuit.

20. An optical device according to any one of claims 1 to 19, characterized by the fact that at least one integrated electro m c circuit (5, 6) for driving the display device (200) is disposed on a side area (3, 4) of one of the transparent members of the display outside the useful zone (2) containing the symbols to be displayed.

21. An optical device according to any one of claims 1 to 20, characterized by the fact that respective electronic circuits (5, 6) for driving the display are disposed on each of the vertical side areas (3, 4) of one of the transparent members of the display, outside the useful area (2) showing symbols to be displayed.

PB

T

102

100

200

V

FIG.1

FIG_2

FIG_3

EP 0 477 287 B1

MIROIR
CONCAVE

100

300

MIROIR
PLAN

200

IMAGEUR

FIG.4

FIG.6

FIG.5

14

MIROIR

100

O-O

AXE DU REGARD

IMAGE VIRTUELLE

202

200

AXE MIROIR

IMAGEUR

OPTIQUE CORRECTRICE

400

FIG_7

EP 0 477 287 B1

FIG.8

FIG.9

FIG.10

16

PUPILLE

hp

écart
oculaire
60mm

champ œil droit

champ œil gauche

champ instantané

IMAGE

## FIG_11

zone de champ
instantané

212　　　　　　　　　210　　　　　　　214

## FIG_12

FIG.13

## FIG.14

$O_1$

Oeil

Miroir
Diametre $\phi$ , Courbure C

$\theta$

Axe du miroir

$O_2$

B

IV

B'  Image virtuelle

Imageur
Dimension K

100

Dimension K'

200

## FIG. 15

200

220

222

224

## FIG. 16A

O

## FIG. 16B

F

K

I